# EUROPÄISCHE PATENTSCHRIFT

(11) **EP 3 129 635 B1**
(45) Veröffentlichungstag und Bekanntmachung des Hinweises auf die Patenterteilung: **17.10.2018**
(21) Anmeldenummer: 15707318.0
(22) Anmeldetag: 23.02.2015
(51) Int. Cl.: F02M 26/00, F02D 9/06, F02D 9/10, F16K 1/22

(54) **KLAPPENVORRICHTUNG FÜR EINE VERBRENNUNGSKRAFTMASCHINE**
FLAP DEVICE FOR AN INTERNAL COMBUSTION ENGINE
SYSTÈME À CLAPET POUR MOTEUR À COMBUSTION INTERNE

(30) Priorität: 01.04.2014 DE 102014104578
(43) Veröffentlichungstag der Anmeldung: 15.02.2017
(73) Patentinhaber: Pierburg GmbH, 41460 Neuss (DE)
(72) Erfinder: GERARDS, Hans, 52538 Gangelt (DE); GRAUTEN, Andreas, 47802 Krefeld (DE); MICHELS, Jürgen, 41238 Mönchengladbach (DE); HOLLER, Tim, 47918 Tönisvorst (DE); KLASS, Kirill, 40223 Düsseldorf (DE)
(74) Vertreter: Patentanwälte ter Smitten Eberlein-Van Hoof Rütten Partnerschaftsgesellschaft mbB
(86) Internationale Anmeldenummer: PCT/EP2015/053741
(87) Internationale Veröffentlichungsnummer: WO 2015/149995

(56) Entgegenhaltungen:
- DE-A1-102012 210 468
- DE-A1-102013 209 755
- US-A1- 2007 240 677

## Beschreibung

Die Erfindung betrifft eine Klappenvorrichtung für eine Verbrennungskraftmaschine mit einem Strömungsgehäuse, das einen Strömungskanal begrenzt, einem Klappenkörper, der drehbar im Strömungskanal angeordnet ist, einer Welle, auf der der Klappenkörper befestigt ist, einem Aktor, über den die Welle und der Klappenkörper im Strömungskanal drehbar sind, einem Aktorgehäuse, in dem der Aktor angeordnet ist, wobei die Welle in das Aktorgehäuse ragt und über ein erstes Lager und ein zweites Lager einseitig gelagert ist.

Derartige Klappenvorrichtungen werden beispielsweise als Abgasstauklappen oder Abgasrückführventile in Niederdruck- oder Hochdruckabgaskreisläufen oder als Drosselklappen im Ansaugtrakt von Verbrennungsmotoren eingesetzt und dienen zur Regelung einer zu den Zylindern zurückzuführenden Abgasmenge oder zur Regelung des Drucks im Abgasrückführkanal zur Verringerung des Schadstoffemissionen des Motors oder zur Regelung der angesaugten Luftmenge.

Je nach Einbauort sind diese Ventile sowohl bezüglich der anfallenden Schadstoffmenge als auch bezüglich der herrschenden Temperaturen unterschiedlich stark belastet. Insbesondere bei Ventilen, welche im Abgasbereich angeordnet sind, können aufgrund der hohen thermischen Belastung Wärmedehnungen entstehen, die zu einem Verklemmen der Welle führen können. Des Weiteren muss auch bei nicht thermisch belasteten Ventilen, welche lediglich einseitig gelagert werden, eine einfache Drehbarkeit sichergestellt werden, indem eine zuverlässige Lagerung bereitgestellt wird, mit der Fluchtungsfehler vermieden werden.

Eine solche Klappenvorrichtung mit zwei Lagern, welche an einer Seite des Klappenkörpers angeordnet sind, ist aus der DE 10 2007 000 221 A1 bekannt. Diese beiden Lager sind in einem Gehäuse angeordnet, welches gleichzeitig das Strömungsgehäuse als auch das Aktorgehause bildet. Entsprechend muss bei einem derartigen Ventil eine aktive Kühlung mittels Kühlwasser vorgesehen werden, um es in einem thermisch belasteten Bereich nutzen zu können.

Aus diesem Grund wird in der DE 10 2009 011 951 A1 eine Abgasklappenvorrichtung vorgeschlagen, bei der das Aktorgehäuse vom Strömungsgehäuse getrennt ausgebildet ist. Die beiden Gehäuse werden über einen Befestigungsrahmen, der mit dem Strömungsgehäuse verschweißt ist, mittels zweier radial verlaufender Schrauben aneinander befestigt und die Klappenwelle über eine Kupplung mit der Welle des Aktors verbunden. Die Lagerung der Klappe erfolgt vollständig im Strömungsgehäuse an den beiden axialen Enden der Welle. Eine korrekte Ausrichtung des Strömungsgehäuses zum Aktorgehäuse zum Erhalt einer korrekten Anbindung des Antriebs ist bei einer derartigen Ausführung nicht sichergestellt.

Des Weiteren ist aus der DE 10 2013 209 755 A1 eine Abgasrückführklappe bekannt, bei der der Aktor in einem Gehäuse angeordnet ist, welches einstückig mit dem Strömungsgehäuse ausgebildet ist. In diesem Gehäuse ist die Klappenwelle einseitig über zwei axial hintereinander liegenden Lagern gelagert. Entsprechend hoch ist die thermische Belastung des Aktors, da sich das Gehäuse durch die Wärme des Abgaskanals vollständig erwärmt.

Entsprechend bestehen bei den bekannten Ausführungen die Nachteile, dass entweder eine thermische Überlastung ohne die Verwendung einer aktiven Kühlung zu erwarten ist oder eine korrekt ausgerichtete Anbindung des Aktorgehäuses zum Strömungsgehäuse oder der vorhandenen Wellen und damit eine Leichtgängigkeit des Aktors und der Klappe nicht über eine lange Lebensdauer sichergestellt werden können. Des Weiteren können insbesondere bei zweiseitig gelagerten Klappen Probleme bei der Montage oder durch auftretende Wärmedehnungen im Betrieb entstehen. Bei Verwendung von Getrieben müssen bei gekoppelten Wellen beide Wellen separat vollständig gelagert werden.

Es stellt sich daher die Aufgabe, eine Klappenvorrichtung für eine Verbrennungskraftmaschine zur Verfügung zu stellen, welche ohne aktive Wasserkühlung thermisch belastbar ist, einfach montiert werden kann und bei der eine korrekte Anbindung und Ausrichtung des Aktorgehäuses zum Strömungsgehäuse zum Erhalt geringer Stellkräfte und einem Verhindern von Verklemmen der Welle sichergestellt wird. Des Weiteren soll möglichst wenig Bauraum benötigt werden und die Klappenvorrichtung soll kostengünstig hergestellt werden können.

Diese Aufgabe wird durch eine Klappenvorrichtung mit den Merkmalen des Hauptanspruchs 1 gelöst.

Dadurch, dass das erste Lager in einer ersten Lageraufnahme angeordnet ist, welche am Strömungsgehäuse ausgebildet ist und das zweite Lager in einer zweiten Lageraufnahme angeordnet ist, welche am Aktorgehäuse ausgebildet ist, wobei ein Vorsprung des Strömungsgehäuses, in dem die erste Lageraufnahme ausgebildet ist, radial gegen ein Aufnahmeelement des Aktorgehäuses anliegt, wird eine korrekte Ausrichtung der Welle zum Aktor und somit eine Leichtgängigkeit des Getriebes sichergestellt. Die einseitige Klappenlagerung führt dabei auch zu einer Unempfindlichkeit gegen Verzug durch thermische Belastung. Zusätzlich ist die Anbindung der Klappe am Aktor auf einfache Weise möglich, so dass die Montage kostengünstig durchführbar ist. Dennoch ist eine solche Klappenvorrichtung besonders kostengünstig herstellbar und benötigt einen geringen Bauraum, da auf eine zusätzliche Lagerung der Ausgangswelle des Getriebes verzichtet werden kann. Gleichzeitig wird eine korrekte axiale Aufnahme des Aktorgehäuses am Strömungsgehäuse sichergestellt und somit ein radialer Versatz, der zu einem Verklemmen führen könnte, zuverlässig vermieden. Auch wird durch diese Anbindung ein Abführen von Wärme von der Klappenwelle über das Aktorgehäuse ermöglicht.

In einer hierzu weiterführenden Ausführung weisen die Lageraufnahme des Aktorgehäuse, die Lageraufnahme des Strömungsgehäuses und das Aufnahmeelement eine gemeinsame Mittelachse auf, so dass diese Anbindung in Axialrichtung direkt über die Lagerstellen der beiden Gehäuse erfolgt, wodurch ein Versatz ausgeschlossen werden kann.

Um bei einer derartigen Anbindung der Gehäuse aneinander eine ausreichende Dichtigkeit zwischen den Gehäuse sicherzustellen, so dass kein Abgas entlang der Welle nach außen dringen kann, ragt der Vorsprung des Strömungsgehäuses in eine Aufnahmeöffnung des Aufnahmeelementes und liegt axial unter Zwischenlage einer Dichtung gegen einen Absatz am Aufnahmeelement an.

Vorzugsweise ist das Strömungsgehäuse am Aktorgehäuse mittels Schrauben befestigt, so dass eine einstellbare und ausrichtbare Befestigung entsteht. Entsprechend kann der Aktor für verschiedene Klappen genutzt werden, ohne die Konstruktion ändern zu müssen.

In einer besonders vorteilhaften Ausführung ist das Strömungsgehäuse über zwei Schrauben am Aktorgehäuse befestigt, wobei eine erste Schraube koaxial zur Wellenachse angeordnet ist und eine zweite Schraube tangential zur Wellenachse angeordnet ist. Durch eine derartige Befestigung kann eine optimale Fluchtung der beiden Lager zueinander eingestellt werden, da sowohl Winkel als auch Längenversätze ausgeglichen werden können. Auch können die Lagerspiele zur Welle minimiert werden, wodurch die Abdichtung verbessert wird und die Lager eine längere Lebensdauer aufweisen.

Eine derartige Montage ist besonders einfach durchführbar, wenn am Strömungsgehäuse Verbindungsplatten befestigt sind, in denen Bohrungen zur Durchführung der Schrauben ausgebildet sind und am Aktorgehäuse Gewindebohrungen zur Aufnahme der Schrauben ausgebildet sind.

Vorzugsweise ist in der zweiten Lageraufnahme axial an der vom Klappenkörper weg weisenden Seite des zweiten Lagers ein Dichtring angeordnet, der die Welle umgibt. So kann ein Eindringen von heißem Abgas in das Aktorgehäuse zuverlässig vermieden werden.

In einer vorteilhaften Ausführungsform sind das erste Lager und das zweite Lager als Gleitlager ausgeführt. Diese sind unempfindlich gegen thermische Belastung oder Verunreinigungen. Des Weiteren kann durch diese Lager eine gute thermische Anbindung und somit Wärmeabfuhr zum Aktorgehäuse sichergestellt werden.

In einer alternativen Ausführungsform ist in der zweiten Lageraufnahme eine als Axiallager dienende Lagerbuchse und ein als Radiallager wirkendes Nadellager mit Radialdichtringen angeordnet Ist. Das Nadellager führt einerseits aufgrund der integrierten Dichtringe zu einer guten Wellenabdichtung und andererseits zu einer sehr guten radialen, spielarmen Lagerung mit hoher Tragkraft.

Vorzugsweise ist auf der Welle eine Anlaufscheibe befestigt, welche mittels einer Druckfeder gegen das zweite Gleitlager oder die Lagerbuchse belastet ist. Die Anlaufscheibe ist fest auf der Welle befestigt und sorgt mit der Feder für eine axiale Positionsfestlegung der Welle und damit der Klappe im Kanal. Durch den Kontakt zur Lagerbuchse oder dem Gleitlager wird zusätzlich der Wärmekontakt zu diesen Bauteilen erhöht, wodurch wiederum eine erhöhte Wärmeabfuhr erreicht wird.

Es wird somit eine Klappenvorrichtung für eine Verbrennungskraftmaschine geschaffen, die im Heißgasbereich eingesetzt werden kann und mit der eine Leichtgängigkeit der Klappe beziehungsweise der Welle auch bei auftretendem Wärmeverzug sichergestellt werden kann. Die Montage ist einfach. Durch eine korrekte Fluchtung der Lager wird das Drehen der Klappe beziehungsweise der Welle mit geringem Drehmoment ermöglicht. Es werden zusätzliche Lager eingespart, so dass die Montage erleichtert wird und Kosten reduziert werden.

Zwei Ausführungsbeispiele erfindungsgemäßer Klappenvorrichtungen sind in den Figuren dargestellt und werden nachfolgend beschrieben.
Figur 1 zeigt eine Seitenansicht einer ersten Ausführung einer erfindungsgemäßen Klappenvorrichtung in geschnittener Darstellung.
Figur 2 zeigt eine im Vergleich zum ersten Ausführungsbeispiel um 90° gedrehte Darstellung einer zweiten Ausführung einer erfindungsgemäßen Klappenvorrichtung in geschnittener Darstellung.

Die erfindungsgemäßen Klappenvorrichtungen weisen ein Strömungsgehäuse 10 auf, welches einen Strömungskanal 12 begrenzt. Im Strömungskanal 12 ist ein Klappenkörper 14 angeordnet, über den der Durchströmungsquerschnitt des Strömungskanals 12 geregelt werden kann, indem der Klappenkörper 14 im Strömungskanal 12 gedreht wird.

Hierzu ist der Klappenkörper 14 auf einer Welle 16 befestigt, die durch das Strömungsgehäuse 10 in den Strömungskanal 12 ragt. Am zum Klappenkörper 14 gegenüberliegenden Ende ist auf der Welle 16 ein Abtriebszahnrad 18 befestigt, welches Teil eines als Stirnradgetriebe ausgebildeten Getriebes 20 ist. Dieses Getriebe 20 wird über einen Elektromotor 22 bei entsprechender Bestromung des Elektromotors 22 angetrieben. Hierzu ist auf einer Ausgangswelle 24 des Elektromotors 22 ein Antriebsritzel 26 befestigt, welches als Antriebsglied des Getriebes 20 wirkt, so dass die Drehbewegung des Elektromotors 22 untersetzt über das Getriebe 20 auf die Welle 16 und damit auf den Klappenkörper 14 übertragen wird.

Der Elektromotor 22 und das Getriebe 20 dienen somit als Aktor 28 der Klappenvorrichtung und sind in einem gemeinsamen Aktorgehäuse 30 angeordnet, welches aus einem Hauptgehäuseteil 32, in dem der Elektromotor 22 sowie das Getriebe 20 montiert sind und einem einen Aktorinnenraum 34 verschließenden Deckel 36 besteht, der unter Zwischenlage einer Dichtung 38 am Hauptgehäuseteil 32 befestigt ist. Um den verwendeten Bauraum möglichst gering zu halten und den Elektromotor sowie das Getriebe 20 im Hauptgehäuseteil 32 einfach montieren zu können, ragt der parallel zur Welle 16 angeordnete Elektromotor 22 in Richtung des Strömungsgehäuses 10.

Um ein Eindringen von Abgas in das Aktorgehäuse 30 zu verhindern und eine einfache Drehbarkeit und Positionierung der Welle 16 beziehungsweise des Klappenkörpers 14 im Strömungskanal 12 sicher zu stellen, muss die Welle 16 zuverlässig axial und radial gelagert sowie abgedichtet werden. Aufgrund der Verwendung der Klappenvorrichtung im heißen Abgasbereich muss zusätzlich der Elektromotor 22 vor zu hoher thermischer Belastung geschützt werden.

Hierzu ist am Strömungsgehäuse 10 eine Lageraufnahme 40 in Form eines hohlzylindrischen Vorsprungs 42 ausgebildet, der sich in Richtung eines hohlzylindrischen Aufnahmeelementes 44 am Aktorgehäuse 30 erstreckt. Das Innere dieses hohlzylindrischen Aufnahmeelementes 44 bildet eine radial begrenzte Aufnahmeöffnung 46, in die der hohlzylindrische Vorsprung 42 des Strömungsgehäuses 10 ragt, wobei der Innendurchmesser der Aufnahmeöffnung 46 im Wesentlichen dem Außendurchmesser des Aufnahmeelementes 44 entspricht. Bei der Montage wird das axiale Ende des hohlzylindrischen Vorsprungs 42 gegen ein absatzförmige Ende 48 der Aufnahmeöffnung 46 unter Zwischenlage einer Axialdichtung 50 geschoben.

An das Aufnahmeelement 44 schließt sich in den Aktorinnenraum 34 ragend ein hohlzylindrischer Vorsprung 52 verkleinerten Durchmessers an, so dass zwischen dem sich axial erstreckenden Aufnahmeelement 44 und dem sich axial erstreckenden hohlzylindrischen Vorsprung 52 ein weiterer Absatz 54 ausgebildet ist. Der zweite hohlzylindrische Vorsprung 52 des Aktorgehäuses 30 dient als zweite Lageraufnahme 56.

In der ersten Lageraufnahme 40 des Strömungsgehäuses 10 ist ein als Gleitlager ausgeführtes erstes Lager 58 für die Welle 16 angeordnet, welches aus Kohle-Graphit hergestellt ist und axial gegen eine die Wellendurchführungsöffnung radial begrenzende Wand anliegt. Die Welle 16 erstreckt sich durch das erste Lager 58 und über den in den Aktorinnenraum 34 ragenden Vorsprung 52 hinaus in den Aktorinnenraum 34. Die zweite Lageraufnahme 56 weist eine Querschnittsverengung auf, an deren entgegengesetzten Enden jeweils ein Absatz 60, 62 gebildet wird. Die Vorsprünge 42, 52, das Aufnahmeelement 44 sowie die Lager weisen eine gemeinsame Mittelachse 63 auf, die gleichzeitig die Wellenachse ist.

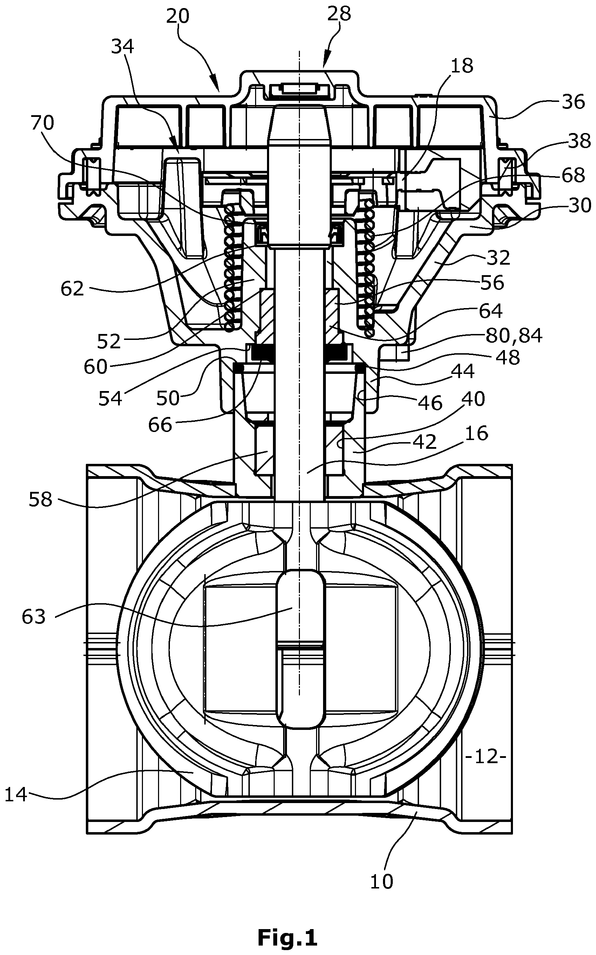

Bei der in der Figur 1 dargestellten Ausführung der Klappenvorrichtung ist radial innerhalb dieses verengten Querschnitts ein zweites Lager 64 angeordnet, welches als Kohle-Graphit-Gleitlager ausgeführt ist, so dass die Welle 16 zweifach an einer Klappenseite gelagert ist. Das zum Klappenkörper 14 weisende axiale Ende dieses Lagers 64 ragt geringfügig über den Absatz 54 hinaus. Auf diese Weise wird es möglich, dass eine fest auf der Welle 16 angeordnete Anlaufscheibe 66 über eine Dreh- und Druckfeder 68 zur axialen Lagefixierung der Welle 16 gegen das zweite Lager 64 gedrückt wird und eine zusätzliche Abdichtung bildet, die einen Gasstrom entlang der Welle 16 in Richtung des Aktors 28 deutlich reduziert.

Diese Dreh-Druckfeder 68 ist im Aktorinnenraum 34, den Vorsprung 52 radial umgebend angeordnet und drückt gegen das fest auf der Welle 16 angeordnete Abtriebszahnrad 18, so dass mit diesem auch die Welle 16 in dieser axialen Richtung belastet wird. Des Weiteren greifen die beiden Endschenkel der Feder 68 in bekannter Weise derart hinter in den Figuren nicht erkennbare Vorsprünge am Aktorgehäuse 30 und am Abtriebszahnrad 18, dass die Welle 16 in eine Richtung zumindest bei Drehung aus der Ruhestellung vorgespannt ist. Entsprechend wird die Welle 16 aufgrund der Federkraft bei Ausfall des Elektromotors 22 in eine Notlaufposition gedreht.

Am in den Aktorinnenraum weisenden Ende des Vorsprungs 52 ist die Welle 16 umgebend ein Dichtring 70 angeordnet, der axial gegen den Absatz 62 anliegt und die Wellendurchführung durch die Lageraufnahme 56 in Richtung des Aktorinnenraums 34 abdichtet.

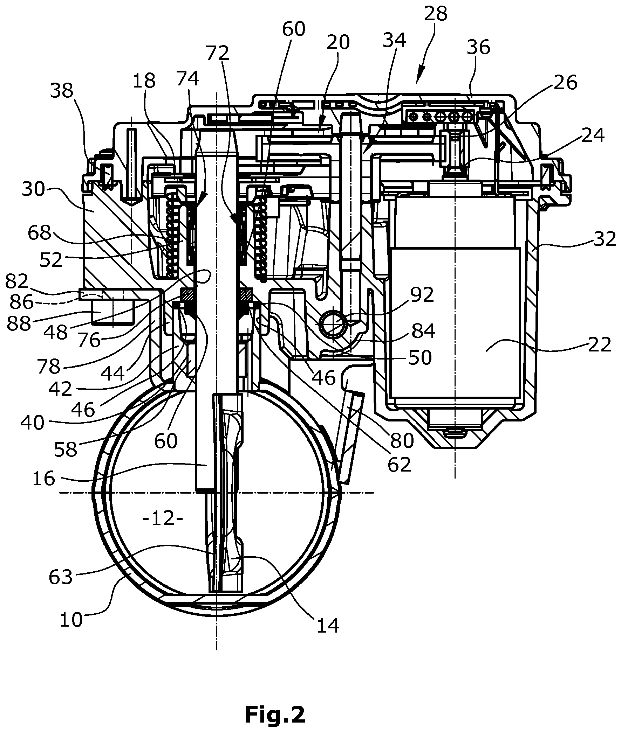

Das Ausführungsbeispiel gemäß der Figur 2 unterscheidet sich von dem Vorbeschriebenen durch eine geänderte Ausführung der Lagerung und Abdichtung. Anstelle der Verwendung des zweiten Gleitlagers 64 und des Dichtrings 70 erfolgt die Abdichtung und Lagerung durch eine Kombination eines Radiallagers in Form eines Nadellagers 72 mit integrierten Dichtringen 74 sowie einem Axiallager in Form einer Lagerbuchse 76.

Das Nadellager 72 liegt am zum Aktorinnenraum 34 weisenden Absatz 62 des Vorsprungs 52 an und dient als zweites Lager 64 zur Lagerung der Welle 16. Über die integrierten Dichtringe 74 wird die Wellendurchführung im Vorsprung 52 in Richtung des Aktorinnenraums 34 abgedichtet, so dass ein Eindringen von Abgas in den Aktorinnenraum 34 verhindert wird.

Die Lagerbuchse 76 liegt gegen den zum Strömungsgehäuse 10 weisenden Absatz 54 im Bereich des Vorsprungs 52 an, der in dieser Ausführungsform gleichzeitig der Absatz 60 der Querschnittsverengung ist. Die Lagerbuchse 76 ragt wie im ersten Ausführungsbeispiel das Gleitlager 64 über den Absatz 54, 60 hinaus, so dass die Anlaufscheibe 66 durch die Feder 68 gegen die Lagerbuchse 76 belastet wird und auf der Lagerbuchse 76 dreht und hier wiederum einen Abgasstrom entlang der Welle 16 in Richtung des Aktors 28 und der Dichtringe 74 minimiert.

Beiden Ausführungen ist gemeinsam, dass eine Vorpositionierung des Aktorgehäuses 30 zum Strömungsgehäuse 10 durch das Einschieben des Vorsprungs 42 des Strömungsgehäuses 10 in die Aufnahmeöffnung 46 und dessen Anschlag am Absatz 54 erfolgt. Des Weiteren wird durch die beiden Lageraufnahmen 40, 56 im Aktorgehäuse 30 und im Strömungsgehäuse 10 sichergestellt, dass die Welle 16 sowohl zum Getriebe 20 als auch zum Strömungskanal 12 optimal angeordnet ist.

Da jedoch sowohl das Strömungsgehäuse 10 als auch das Aktorgehäuse 30 gewisse Fertigungstoleranzen aufweisen, kann ein leichter Winkel- und Längenversatz der Lager 58, 64, 72, 76 zueinander die Folge sein, der aufgrund von Wärmeeinflüssen verstärkt werden kann. Dies würde zu höheren notwendigen Stellkräften und einem erhöhten Verschleiß. Dies wird jedoch durch die besondere Befestigung des Aktorgehäuses 30 am Strömungsgehäuse 10 vermieden.

Am Strömungsgehäuse 10 sind Verbindungsplatten 78, 80 beispielsweise durch Schweißen befestigt. Die erste Verbindungsplatte 78 ist in ihrem vom Strömungsgehäuse weg weisenden Bereich so gebogen, dass sie sich mit ihrem Endbereich 82 senkrecht zur Wellenachse erstreckt und flächig gegen das Aktorgehäuse 30 anliegt. Die andere Verbindungsplatte 80 befindet sich an der radial entgegengesetzten Seite der Wellenachse zwischen dem Elektromotor 22 und der Welle 16, wobei deren Endbereich 84 sich in einer Ebene erstreckt, die durch einen Vektor in radialer Richtung zur Wellenachse und einen Vektor, der sich koaxial zur Wellenachse erstreckt, aufgespannt wird. In den Endbereichen 82, 84 sind jeweils Durchgangsbohrungen 86 ausgebildet, in die Schrauben 88, jeweils senkrecht zu den Endbereichen 82, 84 gesteckt werden, welche in sich entsprechend erstreckende Gewindebohrungen 92 im Aktorgehäuse 30 gedreht werden. Die erste Schraube 88 erstreckt sich somit koaxial zur Wellenachse während sich die zweite Schraube tangential zur Wellenachse erstreckt. Dies hat zur Folge, dass durch die Befestigung der Schrauben 88 das Aktorgehäuse 30 genau zum Strömungsgehäuse 10 ausrichtet und zwar rotatorisch und axial, wodurch die Befestigung keine Freiheitsgrade für eine Relativbewegung zwischen dem Aktorgehäuse 30 und dem Strömungsgehäuse 10 hinterlässt. Entsprechend werden auch die Lager bei Befestigung der Schrauben 88 exakt zueinander ausgerichtet. Diese Form der Befestigung ermöglicht, falls erforderlich auch einen Ausgleich von vorhandenen Toleranzen, so dass immer eine exakte Ausrichtung der beiden Lager 58, 64, 72 zueinander möglich ist.

Es wird somit eine Klappenvorrichtung geschaffen, bei der eine exakte Ausrichtung zweier Lager zueinander sichergestellt wird, von denen eines im Aktorgehäuse und eines im Strömungsgehäuse angeordnet ist. So werden eine gute Positionierung des Klappenkörpers im Kanal und eine Anbindung der Stellwelle sichergestellt. So kann eine durchgängige Welle verwendet werden, die gleichzeitig Klappenwelle und die Ausgangswelle des Getriebes bildet, so dass auf mehrere Lager verzichtet werden kann, was wiederum zu einer Vereinfachung der Montage und einen kleineren benötigten Bauraum führt.

## Patentansprüche

1. Klappenvorrichtung für eine Verbrennungskraftmaschine mit
einem Strömungsgehäuse (10), das einen Strömungskanal (12) begrenzt,
einem Klappenkörper (14), der drehbar im Strömungskanal (12) angeordnet ist,
einer Welle (16), auf der der Klappenkörper (14) befestigt ist,
einem Aktor (28), über den die Welle (16) und der Klappenkörper (14) im Strömungskanal (12) drehbar sind,
einem Aktorgehäuse (30), in dem der Aktor (28) angeordnet ist,
wobei die Welle (16) in das Aktorgehäuse (30) ragt und über ein erstes Lager (58) und ein zweites Lager (64; 72, 76) einseitig gelagert ist, wobei das erste Lager (58) in einer ersten Lageraufnahme (40) angeordnet ist, welche am Strömungsgehäuse (10) ausgebildet ist und das zweite Lager (64; 72, 76) in einer zweiten Lageraufnahme (56) angeordnet ist, welche am Aktorgehäuse (30) ausgebildet ist, **dadurch gekennzeichnet, dass** ein Vorsprung (42) des Strömungsgehäuses (10), in dem die erste Lageraufnahme (40) ausgebildet ist, radial gegen ein Aufnahmeelement (44) des Aktorgehäuses (30) anliegt.

2. Klappenvorrichtung für eine Verbrennungskraftmaschine nach Anspruch 1,
**dadurch gekennzeichnet, dass**
die Lageraufnahme (56) des Aktorgehäuse (30), die Lageraufnahme (40) des Strömungsgehäuses (10) und das Aufnahmeelement (44) eine gemeinsame Mittelachse (63) aufweisen.

3. Klappenvorrichtung für eine Verbrennungskraftmaschine nach einem der Ansprüche 1 oder 2,
**dadurch gekennzeichnet, dass**
der Vorsprung (42) des Strömungsgehäuses (10) in eine Aufnahmeöffnung (46) des Aufnahmeelementes (44) ragt und axial unter Zwischenlage einer Dichtung (50) gegen ein absatzförmiges Ende (48) des Aufnahmeelementes (44) anliegt.

4. Klappenvorrichtung für eine Verbrennungskraftmaschine nach einem der vorhergehenden Ansprüche,
**dadurch gekennzeichnet, dass**
das Strömungsgehäuse (10) am Aktorgehäuse (30) mittels Schrauben (88) befestigt ist.

5. Klappenvorrichtung für eine Verbrennungskraftmaschine nach Anspruch 4,
**dadurch gekennzeichnet, dass**
das Aktorgehäuse (30) über zwei Schrauben am Strömungsgehäuse (10) befestigt ist, wobei eine erste Schraube (88) koaxial zur Wellenachse (63) angeordnet ist und eine zweite Schraube tangential zur Wellenachse (63) angeordnet ist.

6. Klappenvorrichtung für eine Verbrennungskraftmaschine nach einem der Ansprüche 4 oder 5,
**dadurch gekennzeichnet, dass**
am Strömungsgehäuse (10) Verbindungsplatten (78, 80) befestigt sind, in denen Bohrungen (86) zur Durchführung der Schrauben (88) ausgebildet sind und am Aktorgehäuse (30) Gewindebohrungen (92) zur Aufnahme der Schrauben (88) ausgebildet sind.

7. Klappenvorrichtung für eine Verbrennungskraftmaschine nach einem der vorhergehenden Ansprüche,
**dadurch gekennzeichnet, dass**
in der zweiten Lageraufnahme (56) axial an der vom Klappenkörper (14) weg weisenden Seite des zweiten Lagers (64) ein Dichtring (70) angeordnet ist, der die Welle (16) umgibt.

8. Klappenvorrichtung für eine Verbrennungskraftmaschine nach einem der vorhergehenden Ansprüche,
**dadurch gekennzeichnet, dass**
das erste Lager (58) und das zweite Lager (64) als Gleitlager ausgeführt sind.

9. Klappenvorrichtung für eine Verbrennungskraftmaschine nach einem der Ansprüche 1 bis 7,
**dadurch gekennzeichnet, dass**
in der zweiten Lageraufnahme (56) eine als Axiallager dienende Lagerbuchse (76) und ein als Radiallager wirkendes Nadellager (72) mit Radialdichtringen (74) angeordnet ist.

10. Klappenvorrichtung für eine Verbrennungskraftmaschine nach einem der Ansprüche 8 oder 9,
**dadurch gekennzeichnet, dass**
auf der Welle (16) eine Anlaufscheibe (66) befestigt ist, welche mittels einer Druckfeder (68) gegen das zweite Gleitlager (64) oder die Lagerbuchse (76) belastet ist.

## Claims

1. A flap device for an internal combustion engine, comprising:
a flow housing (10) configured to delimit a flow duct (12),
a flap body (14) rotatably attached to the shaft in the flow duct (12),
a shaft (16) on which the flap body (14) is fastened,
an actuator (28) configured to rotate the shaft (16) and thereby the flap body (14) in the flow duct (12),
an actuator housing (30) configured to have the actuator (28) be arranged therein;
the shaft (16) being configured to project into the actuator housing (30) and being mounted at one side via a first bearing (58) and a second bearing (64; 72, 76).
the first bearing (58) being arranged in a first bearing seat (40) formed on the flow housing (10), and the second bearing (64; 72, 76) being arranged in a second bearing seat (56) formed on the actuator housing (30),
**characterized in that**
a protrusion (42) of the flow housing (10) in which the first bearing seat (40) is formed, abuts radially against a receiving element (44) of the actuator housing (30).

2. The flap device for an internal combustion engine as recited in claim 1, **characterized in that** the bearing seat (56) of the actuator housing (30), the bearing seat (40) of the flow housing (10), and the receiving element (44) have a common central axis (63).

3. The flap device for an internal combustion engine as recited in one of claims 1 or 2, **characterized in that** the protrusion (42) of the flow housing (10) is configured to protrude into a receiving opening (46) of the receiving element (44) and to axially abut against a shoulder-shaped end (48) via an interposition of a seal (50).

4. The flap device for an internal combustion engine as recited in of one of the preceding claims, **characterized in that** the flow housing (10) is fastened to the actuator housing (30) by means of screws (88).

5. The flap device for an internal combustion engine as recited in claim 4, **characterized in that** the actuator housing (30) is fastened to the flow housing (10) by two screws, a first screw (88) being arranged coaxially to the shaft axis (63), and a second screw being arranged tangentially to the shaft axis (63).

6. The flap device for an internal combustion engine as recited in one of claims 4 or 5, **characterized in that** connecting plates (78, 80) are fastened on the flow housing (10), in which connecting plates bores (86) are formed for a passage of the screws (88), and wherein the actuator housing (30) is provided with threaded bores (92) to receive the screws (88).

7. The flap device for an internal combustion engine as recited in of one of the preceding claims, **characterized in that** a sealing ring (70), which surrounds the shaft (16), is arranged axially in the second bearing seat (56) on a side of the second bearing (64) averted from the flap body (14).

8. The flap device for an internal combustion engine as recited in of one of the preceding claims, **characterized in that** the first bearing (58) and the second bearing (64) are designed as slide bearings.

9. The flap device for an internal combustion engine as recited in one of claims 1 to 7, **characterized in that** a bearing bushing (76) configured to act as an axial bearing and a needle bearing (72) configured to act as a radial bearing with radial sealing rings (74) are arranged in the second bearing seat (56).

10. The flap device for an internal combustion engine as recited in one of claims 8 or 9, **characterized in that** a thrust washer (66) is fastened on the shaft (16), the thrust washer being pre-loaded against the second slide bearing (64) or the bearing bushing (76) by a compression spring (68).

## Revendications

1. Système à clapet pour moteur à combustion interne avec
un boitier d'écoulement (10) délimitant un conduit d'écoulement (12),
un corps de clapet (14) disposé de manière rotative dans le conduit d'écoulement (12),
un arbre (16) sur lequel le corps de clapet (14) est monté,
un actionneur (28) par lequel l'arbre (16) et le corps de clapet (14) peuvent être tourné dans le conduit d'écoulement (12),
un boitier d'actionneur (30) dans lequel l'actionneur (28) est disposé,
l'arbre (16) saillant dans le boitier d'actionneur (30) et étant supporté sur un coté par un premier palier (58) et un deuxième palier (64; 72, 76),
le premier palier (58) étant disposé dans un premier logement de palier (40) formé sur le boitier d'écoulement (10), et le deuxième palier (64; 72, 76) étant disposé dans un deuxième logement de palier (56) formé sur le boitier d'actionneur (30),
**caractérisé en ce qu'**une saillie (42) du boitier d'écoulement (10), dans laquelle le premier logement de palier (40) est formé, s'appuie radialement sur un élément récepteur (44) du boitier d'actionneur (30).

2. Système à clapet pour moteur à combustion interne selon la revendication 1, **caractérisé en ce que** le logement de palier (56) du boitier d'actionneur (30), le logement de palier (40) du boitier d'écoulement (10), et l'élément récepteur (44) présentent une axe centrale (63) commune.

3. Système à clapet pour moteur à combustion interne selon l'une des revendications 1 ou 2, **caractérisé en ce que** la saillie (42) du boitier d'écoulement (10) saille dans une ouverture réceptrice (46) dudit élément récepteur (44) et s'appuie sur un extrémité (48) dudit élément récepteur (44) en forme d'un épaulement, avec interposition d'un joint (50).

4. Système à clapet pour moteur à combustion interne selon l'une quelconque des revendications précédentes, **caractérisé en ce que** le boitier d'écoulement (10) est monté sur le boitier d'actionneur (30) au moyen de vis (88).

5. Système à clapet pour moteur à combustion interne selon la revendication 4, **caractérisé en ce que** le boitier d'actionneur (30) est monté sur le boitier d'écoulement (10) au moyen de deux vis, une première vis (88) étant disposée coaxialement par rapport à l'axe de l'arbre (63), et une deuxième vis étant disposée tangentiellement par rapport à l'axe de l'arbre (63).

6. Système à clapet pour moteur à combustion interne selon l'une des revendications 4 ou 5, **caractérisé en ce que** des plaques de liaison (78, 80) sont fixées sur le boitier d'écoulement (10), dans lesquelles des alésages (86) sont formés pour le passage des vis (88), et que des alésages filetés (92) sont formés dans le boitier d'actionneur (30) pour recevoir les vis (88).

7. Système à clapet pour moteur à combustion interne selon l'une quelconque des revendications précédentes, **caractérisé en ce qu'**une bague d'étanchéité (70), qui entoure l'arbre (16), est disposée axialement dans le deuxième logement de palier (56) sur le côté du deuxième palier (64) détourné du corps de clapet (14).

8. Système à clapet pour moteur à combustion interne selon l'une quelconque des revendications précédentes, **caractérisé en ce que** le premier palier (58) et le deuxième palier (64) sont conçus comme paliers lisses.

9. Système à clapet pour moteur à combustion interne selon l'une quelconque des revendications 1 à 7, **caractérisé en ce qu'**un coussinet (76) servant comme palier axial et un palier à aiguilles (72) agissant comme palier radial avec des bagues d'étanchéité radiales (74) sont disposés dans le deuxième logement de palier (56).

10. Système à clapet pour moteur à combustion interne selon l'une des revendications 8 ou 9, **caractérisé en ce qu'**une rondelle de butée (66) est montée sur l'arbre (16), qui est sollicitée contre le deuxième palier lisse (64) ou le coussinet (76) par un ressort de pression (68).
